Europäisches Patentamt

(19) European Patent Office  (11) Publication number: **0 042 338**

Office européen des brevets  **B1**

(12) **EUROPEAN PATENT SPECIFICATION**

(45) Date of publication of patent specification: **19.09.84**  (51) Int. Cl.³: **G 01 N 35/00**

(21) Application number: **81400941.1**

(22) Date of filing: **15.06.81**

(54) Apparatus for processing an analysis slide.

(30) Priority: **16.06.80 US 159550**

(43) Date of publication of application:
**23.12.81 Bulletin 81/51**

(45) Publication of the grant of the patent:
**19.09.84 Bulletin 84/38**

(84) Designated Contracting States:
**DE FR GB**

(56) References cited:
**FR-A-2 374 630**
**FR-A-2 374 645**
**US-A-3 574 064**
**US-A-4 011 048**

**RESEARCH DISCLOSURE, September 1980,
disclosure 19729, HAVANT (GB) "Cover means
for an incubator" pages 374-375**

(73) Proprietor: **EASTMAN KODAK COMPANY**
**343 State Street**
**Rochester New York 14650 (US)**

(72) Inventor: **DiFulvio, Anthony Paul**
**901 Elmgrove Road**
**Rochester New York (US)**
Inventor: **Smith, Michael Richmond**
**901 Elmgrove Road**
**Rochester New York (US)**

(74) Representative: **Mestre, Jean et al**
**Kodak-Pathé Département des Brevets et
Licences 30, rue des Vignerons B.P. 60
F-94302 Vincennes Cedex (FR)**

Courier Press, Leamington Spa, England.

## Description

The present invention relates to chemical apparatus for the automatic analysis of biological fluids, and more particularly to apparatus for processing analysis slides.

A number of automated systems have been developed for carrying out quantitative chemical analyses of sample fluids. In FR—A—2374630, there is described a chemical analyzer in which a sample fluid is metered onto an analysis slide which is then transferred into an incubator. The incubator comprises a temperature-controlled chamber having a plurality of transfer locations at which slides can be transferred into or out of the chamber, conveyor means rotatable in the chamber about a horizontal axis and having a plurality of slide-holding means for releasably holding the slides in position on the conveyor, and drive means for effecting movement of the conveyor means to position the slides for transfer at one of the transfer locations. In certain types of analysis slides, fluids remain in liquid form on a surface of the slide during the analysis process. The incubator disclosed in FR—A—2374630 is not suitable for this type of slide, since the slides in the incubator are rotated through a vertical position in which the fluid would be spilled from the slide. Moreover, FR—A—2374630 is not concerned with the problem of evaporation of sample fluid from the slides when conveyed through the incubator.

Patent Specification US—A—3,574,064, discloses apparatus in which glass slides are fed from a single supply station onto a generally horizontal turntable. Slides carried on the turntable are moved past a metering station, and then through wash and incubation stations spaced around the periphery of the turntable. Slides processed by the apparatus are ejected from the turntable into a slide receiver adjacent the slide supply station. Although slides are processed in this apparatus in a generally horizontal position such that fluids would not be spilled from the slides, there is a problem with the apparatus in that fluids evaporate from the slides during the incubation period; such evaporation is undesirable since it can affect the results of the analysis being performed.

An incubator for use with analysis slides is disclosed in RESEARCH DISCLOSURE, Vol. 175, November, 1978, Publication No. 17,569 published by Industrial Opportunities Limited, Homewell, Havant Hampshire, PO9 1EF, United Kingdom. In the disclosed incubator, the analysis slides are horizontally disposed in vertically spaced slots; there is no suggestion in this publication, however, of means for controlling evaporation of fluids on analysis slides during the processing thereof.

It is an object of the invention to overcome the abovedescribed problems in the prior art by providing apparatus for processing analysis slides in which evaporation of fluids on the slides is controlled during the incubation period.

In accordance with the present invention there is provided apparatus for use in a chemical analyzer of the type which is adapted to measure a characteristic of a sample fluid deposited on an analysis slide, the apparatus comprising an incubator having means which defines a temperature-controlled chamber, the chamber having a first transfer location at which an analysis slide can be transferred into the chamber and a second transfer location at which a slide can be transferred out of the chamber, conveyor means in the chamber having a plurality of slide-support stations for receiving analysis slides, the conveyor means being movably supported in the chamber to successively place the slide-support stations at the transfer locations characterized in that cover means provided for controlling evaporation of fluids on slides in the chamber, the cover means being movable by a control means to an operative position to at least partially enclose analysis slides on the conveyor means and to a second position spaced from the operative position to permit analysis slides to be transferred into or out of the slide-support stations.

Embodiments of the present invention will now be described by way of example, with reference to the accompanying drawings in which:

Fig. 1 is a perspective view of a chemical analyzer of the type which employs the subject invention;

Fig. 2 is a top plan view of apparatus for processing analysis slides including a potentiometric incubator and associated analyzer components, with portions broken away to show a preferred embodiment of the present invention;

Fig. 3 is an elevational view of the potentiometric incubator, with a portion shown in section, taken along the line 3—3 of Fig. 2;

Fig. 4 is a sectional view of the slide conditioner and a portion of the potentiometric incubator, taken along the line 4—4 in Fig. 2;

Fig. 5 is a sectional view of a portion of the potentiometric incubator and an electrometer, taken along the line 5—5 in Fig. 2;

Fig. 6 is a sectional view of a slide transfer mechanism, taken along the line 6—6 in Fig. 5; and

Fig. 7 is a sectional view of the slide transfer mechanism and electrometer, taken along the line 7—7 in Fig. 2.

The present invention is described hereinafter in connection with an analyzer for performing quantitative chemical analyses of biological fluids, such as blood serum. However, the invention is not so limited, and it can also be employed in other types of apparatus in which objects carrying fluids subject to evaporation must be transferred from station to station.

In accordance with a feature of the invention, cover means are provided for an analysis slide during the incubation thereof to control evaporation of a fluid from the slide. The cover means described and claimed is particularly suited for a chemical analyzer of the type disclosed herein. Control of evaporation of the fluids is important in such an analyzer, since it is essential that concentrations of various constituents in the sample fluids do not change, once the fluids have been metered onto a slide.

The invention is useful with analyzers in which the substrate which makes the testing of fluids possible comprises a pair of electrodes selective to the ion activity of choice. Recent developments have provided the electrodes in essentially planar, dry form suitable for use in pairs in an analyzer. An example of such a test element is disclosed in Patent Specification US—A—4,053,381. This patent describes a test element, or analysis slide, of the type which is used to potentiometrically designate the activity of ions in a liquid test solution.

The invention can also be used with other forms of test elements, as for example, the element disclosed in Patent Specification US—A—3,992,158. The test element disclosed in this specification is formed as a multi-layered element containing the necessary reagents for reaction with components of a biological fluid, such as blood serum, deposited thereon. Certain reactions colorimetrically produce a change in optical density in the element which is sensed by a reflectometer, the amount of light reflected from the element varying in accordance with the reaction and being indicative of the amount of a particular component present in the fluid.

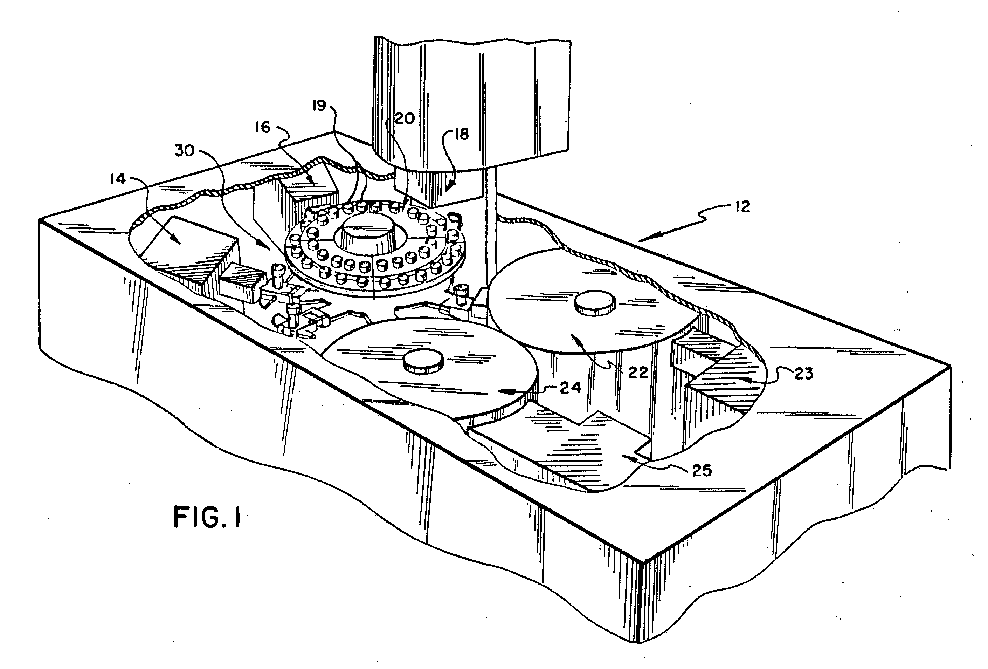

With reference to Fig. 1, there is shown analyzer apparatus 12 which comprises a housing 14 for a supply of analysis slides of the colorimetric type and a housing 16 for a supply of analysis slides of the potentiometric type. A metering device 18 is adapted to meter sample fluid from one of a plurality of cups 19 in a sample tray 20 onto an analysis slide in a slide distributor 30. A second metering device (not shown) works in conjunction with metering device 18 to also deposit reference fluid onto the analysis slides of the potentiometer type. After the metering operations, analysis slides of the potentiometric type are deposited in an incubator 22 by slide distributor 30, and analysis slides of the colorimetric type are deposited in an incubator 24. Incubators 22, 24, are adatped to cooperate respectively with an electrometer 23 and a reflectometer 25 for measuring changes in the analysis slides as a result of the fluids deposited thereon.

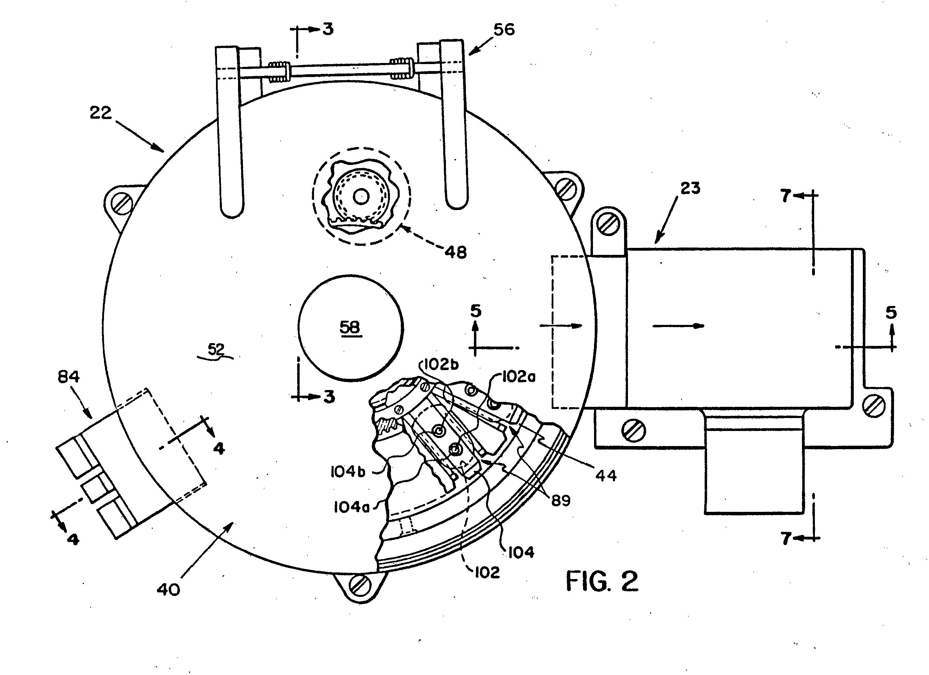

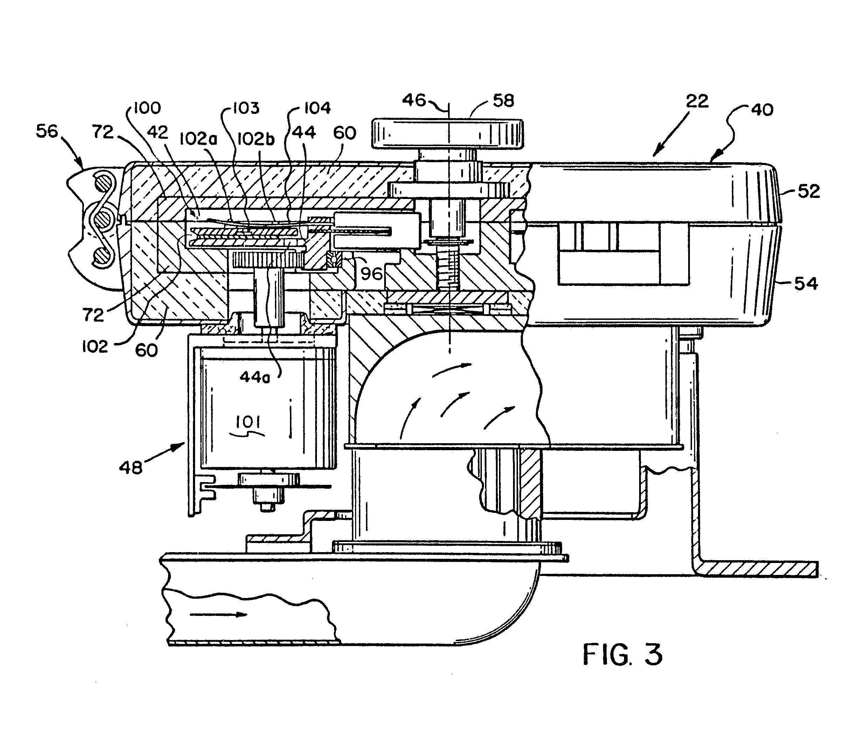

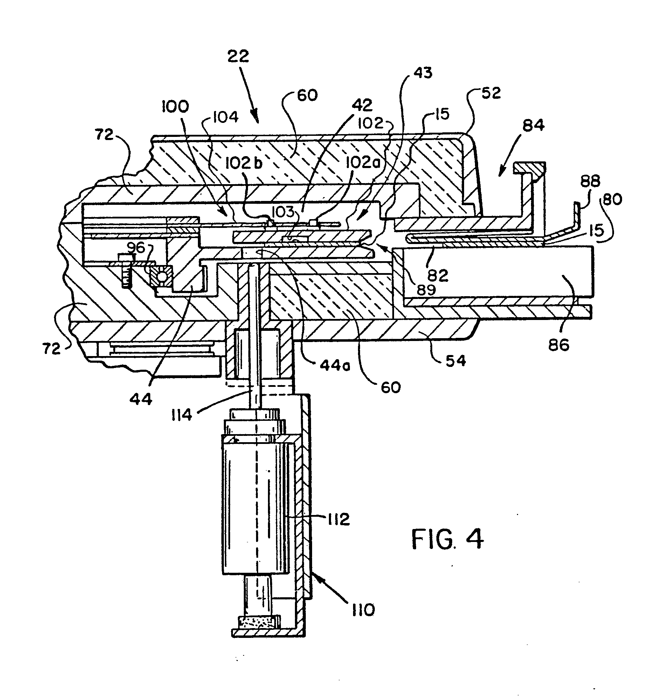

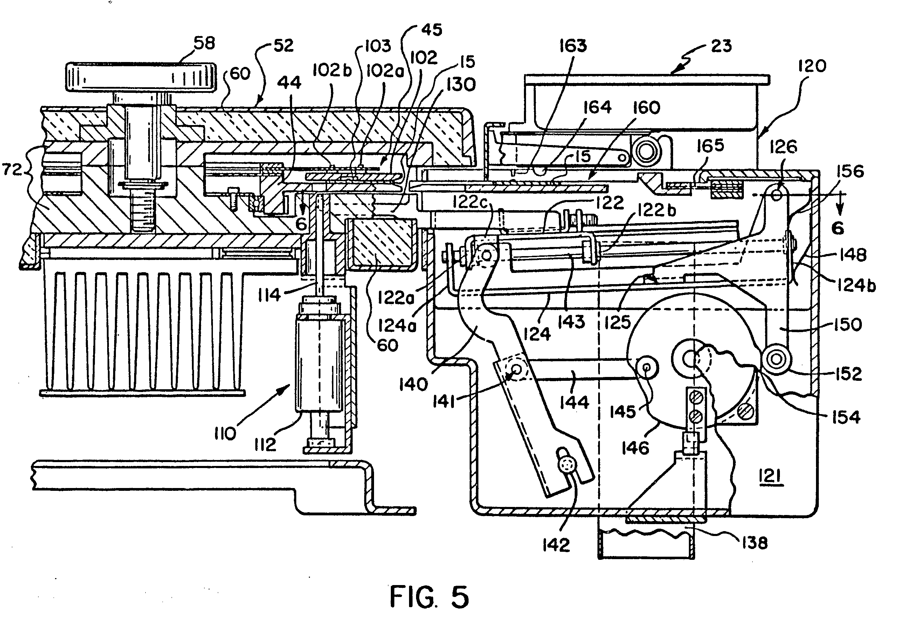

With reference to Figs. 2 and 3, incubator 22 comprises a housing 40 defining a generally cylindrical, temperature-controlled chamber 42, a conveyor means in the form of a rotor 44 mounted for rotation within chamber 42 about a vertical axis designated 46, and a drive mechanism 48 for rotor 44. As will be described in greater detail hereinafter, rotor 44 is adapted to receive analysis slides 15 at a transfer location 43 (Fig. 4), transport the slides in the chamber 42 during the incubation period, and deliver the slides 15 to a second transfer location 45 (Fig. 5). Housing 40 comprises a pair of mating sections 52, 54, which are joined by a hinge assembly 56. Section 52 may be pivoted, by means of hinge assembly 56, from the closed position shown in Fig. 3, to an open position (not shown) to permit access to the chamber 42. In the closed position, section 52 is secured in place by a threaded fastener 58 which is received in section 54. Each of the sections 52, 54, includes, at least in the area of the chamber 42, a double thickness of a suitable metal separated by a layer of insulation 60.

Temperature-control elements 72 are supported by section 52, 54, proximate the outer radial portion of rotor 44. Preferably, the temperature-control elements 72 are in physical contact with each other, at least along the peripheries, to permit heat transfer between the elements. This permits relatively accurate monitoring of the temperature of elements 72 by means of a single thermistor (not shown) supported in direct contact with one of the elements 72. The termistor is connected to a control circuit (not shown) which includes a conventional feedback arrangement to maintain chamber 42 at a constant temperature, preferably 25°C. Other thermistors (not shown) may be positioned in the chamber 42 proximate the rotor 44.

With reference to Fig. 4, a slot 80 is of a shape and size sufficient to allow the transfer of a slide 15 from the slide distributor 30 by a shuttle mechanism (not shown) into a slide conditioner 84 where the slide 15 may be warmed or cooled to a desired temperature. Conditioner 84 is supported relative to housing 40 such that an exit opening 82 communicates with chamber 42 to permit the slide 15 to be moved from the conditioner 84 into chamber 42 at the transfer location 43. Conditioner 84 comprises a support block 86 and a spring retainer 88 which is resiliently biased toward block 86. The spring retainer 88 holds slide 15 in position through contact with the edges of the slide until the shuttle mechanism moves the slide from the conditioner 84 into chamber 42.

Conditioner 84 is adapted to bring the temperature of a slide 15 from ambient temperature to a temperaature near the temperature maintained in the chamber 42, thus, a slide entering chamber 42 at the transfer location 43 does not materially affect the temperature therein, and a very precise temperature control can be maintained in the chamber 42. The support block 86 in conditioner 84 is in physical contact with one of the temperature-controlled elements 72, and heat transfer between the block 86 and the element 72 provides for any desired alteration of the temperature of slide 15.

As shown in Fig. 3, rotor 44 is mounted for rotation within chamber 42 of housing 40. Rotor 44 is adapted to support a plurality of slides 15 at individual slide-support stations 89 (Figs. 2 and 4) for movement in a circular path about axis 46. As shown in Fig. 4, a plurality of openings 44a are formed in rotor 44, with each of the openings 44a being in a predetermined location with respect to each of the slide-support stations 89. The purpose of these openings 44a will be explained hereinafter. Rotor 44 is mounted in incubator 22 by means of a ring bearing 96. In the preferred embodiment, rotor 44 comprises 17 slide-support stations 89, and a slide cover means 100 is located adjacent each station 89. During loading and unloading operations, rotor 44 is advanced by drive mechanism 48 in precise increments to position a selected station 89 at one of the transfer locations 43, 45. Drive mechanism 48 may include a stepper motor 101 which functions in a well known manner to advance rotor 44 in the desired increments.

With reference to Figs. 3, 4, and 5, each of the slide cover means 100 comprises a cover 102; when cover means 100 is in an operative position each cover 102 is biased by a spring 104 to a position wherein the cover 102 is against a slide 15. As will be appreciated, cover 102 cooperates with the top surface of the slide 15 to at least partially enclose the fluid on the slide 15 and thereby control evaporation of the fluid sample. The concentration of the fluid is thus maintained at approximately the level which existed at the time of the metering of the fluid onto slide 15. Cover means 100 is movable to a second position to permit movement of slides 15 into and out of stations 89, as will be explained hereinafter.

Each cover 102 includes a recess 103 which is adapted to receive any of fluid on slide 15 which protrudes beyond the surface of the slide. In this manner, the fluid is not disturbed by the covers 102. Covers 102 are of a non-porous material to eliminate absorption of gases escaping from the slides 15; this minimizes the carryover of such gases from slide to slide. Preferably, spring 104 include at least two apertures 104a, 104b, (Fig. 2) which mate respectively with protruding extensions 102a, 102b of the covers 102 to align the covers and to permit ready removal for periodic cleaning.

A control means for cover means 100 includes two lift mechanisms 110 which serve to move cover means 100 to the second position in which covers 102 are elevated by a distance such that analysis slides 15 can be positioned at or removed from stations 89 in rotor 44, without disturbing fluid carried on the slides 15. Each lift mechanism 110 comprises a solenoid 112 which actuates a push rod 114; the push rod 114 is movable through an opening 44a in the rotor 44 to engage a cover 102. Upon actuation of solenoid 112, rod 114 lifts a cover 102 to permit a slide 15 to be moved relative to a slide-support station 89 positioned adjacent one of the transfer locations 43, 45. The timing of the solenoid 112, or any other motive device provided for lifting the covers 102, may be controlled by appropriate circuitry (not shown), to ensure that the solenoid is actuated only when the rotor 44 has been positioned to locate a slide-support station 89 at either of the transfer locations 43, 45.

A slide transporting mechanism 120, best shown in Figs. 5, 6, and 7, is contained in a housing 121 and comprises a carriage 122 which is slidably mounted on a frame 124 pivotally supported at 126, Carriage 122 comprises fingers 130, 132 which are adapted to simultaneously move a first analysis slide 15 from a sensing position in electrometer 23 to a waste receptacle 138 and a second slide from incubator 22 into the sensing position. Each of the fingers 130, 132, includes a concave portion 130a, 132a, which is of suitable dimensions to receive a slide 15 therein.

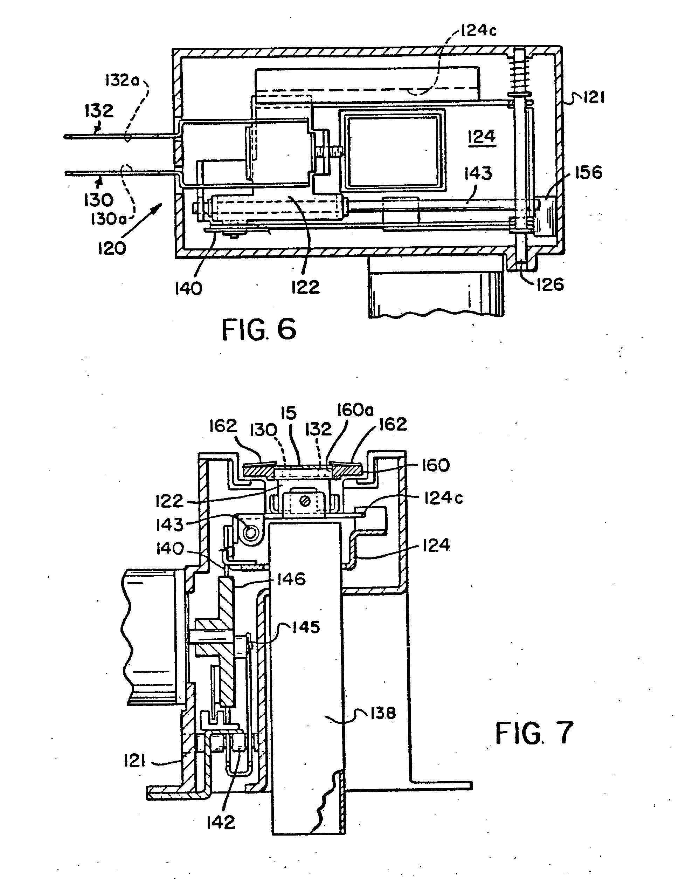

Carriage 122 is supported by frame 124 and is reciprocally driven with respect thereto. A support rod 143 affixed to tabs 124a, 124b, of frame 124 passes through openings in a pair of tabs 122a, 122b extending from a first side of carriage 122. A second side of carriage 122 is supported for movement in a direction parallel to the axis of rod 143 by a guide 124c in frame 124. (See Fig. 6.)

Carriage 122 is reciprocally driven along a path defined by rod 143 and groove 124c by means of a crank arm 140 which is pinned to a tab 122c of carriage 122 and pivotally and slidably mounted at 142 to housing 121. Crank arm 140 is connected through a link 144 to a rotatably driven cam 146. A first end of link 144 is pinned to crank arm 140 at 141 and the second end of link 144 is coupled to cam 146 by a pin 145. A cam follower arm 150, pivotally mounted at 126, comprises a roller 152 which rides on a peripheral surface 154 of cam 146. The cam follower arm 150 is biased into contact with surface 154 by a spring 156.

Frame 124 and carriage 122 are biased in a clockwise direction, as shown in Fig. 5, by a spring 148, and pivotal movement of frame 124 and carriage 122 is controlled by cam follower arm 150 which contacts frame 124 at 125. When roller 152 on follower arm 150 moves into a low portion of surface 154, follower arm 150 will rotate clockwise, permitting carriage 122 and frame 124 to also rotate in a clockwise direction. As carriage 122 rotates in a clockwise direction, it will move into contact with a platen 160.

As shown in Fig. 7, restraining members 162, affixed to platen 160, are adapted to cooperate with a slide 15 positioned in a channel 160a defined in platen 160. Platen 160 is supported for pivotal movement by means of a flexure member 165 affixed to housing 121. Pivotal movement of carriage 122, after contacting platen 160, will cause platen 160 to be pivoted in a clockwise direction to move a slide 15 supported on platen 160 into engagement with a pair of probes 163 in electrometer 23.

After contact of the slide 15 with the probes 163, further pivotal movement of the platen 160 will bring platen 160 into contact with semi-circular stops 164 on electrometer 23. At this point, pivotal movement of carriage 122 stops, but cam follower arm 150 may continue to rotate clockwise as roller 152 follows surface 154. During the continued rotation, cam follower 150 will break contact with frame 124 at 125. Such an over-drive feature ensures that the rotation of cam follower arm 150 is greater than that required to drive the platen 160 into contact with stops 164.

By always driving the platen 160 into stops 164, solid contact is made by probes 163 with each slide 15. After measurement of the potential developed in the slide 15, cam 146 is rotated to return the elements of slide transporting mechanism 120 to the positions shown in Fig. 5.

In operation, slides 15 are sequentially loaded into incubator 22 after a predetermined time in conditioner 84. Analyzer 12 is adapted to be continuously operated and the temperature within incubator 22 is controlled such that slides are ready to be analyzed after a predetermined incubation period. Following analysis, the slide 15 is discarded.

A control system for incubator 22, as well as for other functions of analyzer 12, could include a computer (not shown) which may take any of the various forms known in the art that include programmable minicomputers and programmable microcomputers. The instructions and method of programming such computers is well known in the art, and thus, no further explanation is considered necessary. In the use of such a computer, input data including sample identification, calibration values, and desired tests for each sample would be keyed into the computer. Output signals from the computer would be utilized to provide input signals to the analyzer components to control their operation at the appropriate time in the machine cycle. Results from an analysis means would be transmitted to the computer which would perform the necessary calculations, according to a stored program, to arrive at a concentration for a particular sample. This information, along with sample identification would then be transmitted to a display or printout device.

## Claims

1. Apparatus for use in a chemical analyzer of the type which is adapted to measure a characteristic of a sample fluid deposited on an analysis slide (15), said apparatus comprising an incubator (22) having means (40) which defines a temperature-controlled chamber (42), said chamber (42) having a first transfer location (43) at which an analysis slide (15) can be transferred into the chamber (42) and a second transfer location (45) at which a slide (15) can be transferred out of the chamber (42), conveyor means (44, 48) in said chamber (42) having a plurality of slide-support stations (89) for receiving analysis slides (15), said conveyor means (44, 48) being movably supported in said chamber (42) to successively place said slide-support stations (89) at said transfer locations (43, 45) characterized in that cover means (100) is provided for controlling evaporation of fluids on slides (15) in said chamber (42), said cover means (100) being movable by a control means (110) to an operative position to at least partially enclose analysis slides (15) on said conveyor means (44, 48) and to a second position spaced from said operative position to permit analysis slides (15) to be transferred into or out of said slide-support stations (89).

2. Apparatus according to Claim 1, characterized in that said conveyor means (44, 48) comprises a rotor (44), and said slide support stations (89) are circumferentially spaced around the periphery of said rotor (44).

3. Apparatus according to Claim 2, characterized in that said cover means (100) comprises a plurality of covers (102), each of said covers (102) being adapted to at least partially enclose a slide (15) on said rotor (44) when said cover means (100) is in said operative position.

4. Apparatus according to Claim 3, characterized in that said control means (110) is selectively operable on a cover (102) associated with a slide-support station (89) at a transfer location (43, 45).

5. Apparatus according to any of the preceding claims, characterized in that a slide conditioner (84) is disposed adjacent the first transfer location (43), said slide conditioner (84) being adapted to bring the temperature of a slide (15) from ambient temperature to a temperature near the temperature maintained in said chamber (42).

6. Apparatus according to any one of Claims 2—5, characterized in that an electrometer (23) is disposed adjacent the second transfer location (45), and a slide transporting mechanism (120) is adapted to transfer slides (15) between said rotor (44) and said electrometer (23).

7. Apparatus according to Claim 6, characterized in that said slide transporting mechanism (120) comprises means (122, 148, 160) for moving a slide 15 into contact with probes (163) in said electrometer (23).

## Patentansprüche

1. Vorrichtung, die in einem chemischen Analysegerät zur Messung einer charakteristischen Eigenschaft einer auf ein Analyseplättchen (15) aufgebrachten Flüssigkeitsprobe verwendbar ist, mit einem Inkubator (22), der Mittel (40) aufweist, die eine temperaturgesteuerte Kammer (42) bilden, wobei die Kammer (42) eine erste Übertragungsstelle (43) enthält, an der ein Analyseplättchen (15) in die Kammer (42) überführt werden kann, und eine zweite Übertragungsstelle (45), an der ein Analyseplättchen (15) aus der Kammer (42) entfernt werden kann, mit in der Kammer (42) befindlichen Fördermitteln (44, 48) die mehrere Trägerstationen (89) für die Aufnahme von Analyseplättchen (15) aufweisen, wobei die Fördermittel (44, 48) in der Kammer (42) beweglich gelagert sind, derart, daß die Trägerstationen (89) nacheinander zu den Ubertragungsstellen (43, 45) bewegt werden, dadurch gekennzeichnet, daß eine Abdeckeinrichtung (100) vorgesehen ist, die das Verdampfen von Flüssigkeit auf den Analyseplättchen (15) in der Kammer (42) steuert, wobei die Abdeckeinrichtung (100) mittels einer Steuereinrichtung (110) in eine Arbeitsstellung bewegbar ist, in der sie auf den Fördermitteln (44, 48) befindliche Analyseplättchen (15) zumindest teilweise unschließt, sowie in eine von der Arbeitsstellung im Abstand liegende zweite Stellung, in der Analyseplättchen (15) in die Trägerstationen (89) überführt und wieder aus diesen entfernt werden können.

2. Vorrichtung nach Anspruch 1, dadurch gekennzeichnet, daß die Fördermittel (44, 48) einen Rotor (44) aufweisen und daß die Trägerstationen (89) im Abstand voneinander rund um die Umfangsfläche des Rotors (44) angeordnet sind.

3. Vorrichtung nach Anspruch 2, dadurch gekennzeichnet, daß die Abdeckeinrichtung (100) mehrere Abdeckelemente (102) aufweist, von denen jedes (102) ein Analyseplättchen (15) am Rotor (44) mindestens teilweise umschließen kann, wenn sich die Abdeckeinrichtung (100) in ihrer Arbeitsstellung befindet.

4. Vorrichtung nach Anspruch 3, dadurch gekennzeichnet, daß die Steuereinrichtung (110) wahlweise bei einem Abdeckelement (102) zur Wirkung gebracht werden kann, das einer Trägerstation (89) an einer Übertragungsstelle (43, 45) zugeordnet ist.

5. Vorrichtung nach einem der vorhergehenden Ansprüche, dadurch gekennzeichnet, daß ein Konditionierungsvorrichtung (84) für die Analyseplättchen benachbart der ersten Übertragungsstelle (43) angeordnet ist, wobei die Konditionierungsvorrichtung (84) die Analyseplättchen (15) jeweils von der umgebenden Raumtemperatur auf eine Temperatur bringt, die ungefähr im Bereich der in der Kammer (42) herrschenden Temperatur liegt.

6. Vorrichtung nach einem der Ansprüche 2 bis 5, dadurch gekennzeichnet, daß benachbart der zweiten Übertragungsstelle (45) ein Elektrometer (23) angeordnet ist und daß eine Plättchentransportvorrichtung (120) die Analyseplättchen (15) zwischen dem Rotor (44) und dem Elektrometer (23) transportiert.

7. Vorrichtung nach Anspruch 6, dadurch gekennzeichnet, daß die Plättchentransportvorrichtung (120) Mittel (122, 148, 160) aufweist, mit denen jeweils ein Analyseplättchen (15) mit Sonden (163) des Elektrometers (23) in Berührung gebracht wird.

**Revendications**

1. Appareil pour être utilisé dans un analyseur chimique d'un type qui est conçu pour mesurer une caractéristique d'un échantillon fluide déposé sur une plaquette d'analyse (15), cet appareil qui comprend un incubateur (22) présentant des moyens (40) qui définissent une enceinte (42) à température régulée qui est munie d'un premier poste de transfert (43) où l'on peut transférer une plaquette d'analyse (15) dans l'enceinte (42) et d'un second poste de transfert (45) où l'on peut transférer une plaquette (15) hors de l'enceinte (42), des moyens de transport (44, 48) dans cette enceinte (42) présentant une série de postes support de plaquette (89) pour recevoir des plaquettes d'analyse (15), ces moyens de transport (44, 48) étant montés de manière mobile dans cette enceinte (42) pour placer successivement les postes de support de plaquettes (49) à ces postes de transfert (43, 45) étant caractérisé en ce que des moyens de protection (100) sont disposés pour maîtriser l'évaporation des fluides sur des plaquettes (15) dans l'enceinte (42), ces moyens de protection (100) étant déplaçables par des moyens de commande (110) vers une position active pour au moins partiellement emprisonner des plaquettes d'analyse (15) sur les moyens de transport (44, 48) et vers une deuxième position distante de cette position active pour permettre le transfert des plaquettes d'analyse (15) dans ou hors des postes support de plaquettes (89).

2. Appareil conforme à la revendication 1, caractérisé en ce que ses moyens de transport (44, 48) comprennent un rotor (44) et ces postes support de plaquettes (89) sont répartis suivant une circonférence autour de la périphérie du rotor (44).

3. Appareil conforme à la revendication 2, caractérisé en ce que ces moyens de protection (100) comprennent une série de couvercle (102) qui sont, chacun, adapté pour au moins partiellement emprisonner une plaquette (15) sur ce rotor (44) quand ces moyens de protection (100) sont en position active.

4. Appareil conforme à la revendication 3, caractérisé en ce que ces moyens de commande (110) peuvent agir à volonté sur un couvercle (102) associé à un poste support de plaquettes (89) à un poste de transfert (43, 45).

5. Appareil conforme à l'une des revendications précédentes, caractérisé en ce qu'un conditionneur de plaquettes (84) est disposé à proximité du premier poste de transfert (43), ce conditionneur de plaquettes (84) étant adapté pour porter la température d'une plaquette (15) de la température ambiante à une température voisine de celle entretenue dans l'enceinte (42).

6. Appareil conforme à l'une des revendications 2——5, caractérisé en ce qu'un électromètre (23) est disposé à proximité du second poste de transfert (45), et un mécanisme de transport de plaquettes (120) est disposé pour transférer des plaquettes (15) entre ce rotor (44) et cet électromètre (23).

7. Appareil conforme à la revendication 6, caractérisé en ce que ce mécanisme de transport de plaquettes (120) comprend des moyens (122, 148, 160) pour placer une plaquette (15) au contact de jauges (163) dans cet électromètre (23).

FIG. 1

FIG. 2

FIG. 3

FIG. 4

FIG. 5

0 042 338

FIG. 6

FIG. 7